# EUROPEAN PATENT APPLICATION

(11) **EP 4 491 393 A1**
(43) Date of publication of application: **15.01.2025**
(21) Application number: 23766743.1
(22) Date of filing: 03.03.2023
(51) Int. Cl.: B32B 27/20, B32B 7/023, B32B 27/00, G02B 1/111, G02B 1/14, G02B 1/18, G09F 9/00

(54) **OPTICAL LAMINATE, ARTICLE, AND IMAGE DISPLAY DEVICE**

(30) Priority: 10.03.2022 JP 2022037443
(71) Applicant: Dexerials Corporation, Shimotsuke-shi, Tochigi 323-0194 (JP)
(72) Inventor: KIBUSHI, Yuko, Shimotsuke-shi, Tochigi 323-0194 (JP); ONO, Tetsuya, Shimotsuke-shi, Tochigi 323-0194 (JP)
(74) Representative: Lavoix
(86) International application number: PCT/JP2023/008071
(87) International publication number: WO 2023/171567

(57) **Abstract**

An optical laminate in which a transparent substrate, a hard coat layer, an optically functional layer, and an antifouling layer are sequentially stacked is provided. The hard coat layer includes fillers, has a thickness of greater than 1.0 µm and less than 3.0 µm, and a 10-point mean roughness Rz of a surface of the optical laminate is equal to or greater than 19 nm and equal to or less than 100 nm.

## Description

### [Technical Field]

The present invention relates to an optical laminate, an article, and an image display device.

Priority is claimed on Japanese Patent Application No. 2022-037443, filed March 10, 2022, the content of which is incorporated herein by reference.

### [Background Art]

For example, an antireflection optical laminate may be provided on the surface of a flat panel display (FPD), a touch panel, a solar cell, or the like. With the recent expansion of the market of touch panels of smartphones and various operation devices, demand for enhancement in scratch resistance of an antireflection optical laminate has emerged. Recently, in touch panels, displays, and the like of smartphones and various operation devices, development of a deformable type or a rollable type in which an input surface or a display surface is foldable (bendable) inward or outward has progressed, and demand for an antireflection optical laminate capable of coping with such deformation has emerged. Along with this is a need for enhancement in scratch resistance.

For example, in Patent Document 1, it is described that scratch resistance is controlled by defining a dynamic friction coefficient of an antifouling layer. For example, in Patent Document 2, it is described that scratch resistance is controlled by defining surface roughness of a hard coat layer and a silica particle size. For example, in Patent Document 3, it is described that mechanical characteristics are controlled by defining a mean particle size of nanoparticles with a low refractive index and a solid content ratio of inorganic particles in a low-refractive-index layer.

### [Citation List]

### [Patent Document]

[Patent Document 1]
   Japanese Unexamined Patent Application, First Publication No. 2020-008877
[Patent Document 2]
   Japanese Unexamined Patent Application, First Publication No. 2019-136880
[Patent Document 3]
   Japanese Unexamined Patent Application, First Publication No. 2014-106240

### [Summary of Invention]

### [Technical Problem]

There is a need for further enhancement in scratch resistance of an optical laminate, and there is also a need for development of a new configuration for enhancing scratch resistance. With recent diversity in the shapes of information terminals and the like, there is a need for an optical laminate capable of coping with bending of a display or a touch panel.

The present invention was made in consideration of the aforementioned circumstances, and an objective thereof is to provide an optical laminate, an article, and an image display device that can achieve both excellent scratch resistance and excellent bending resistance.

### [Solution to Problem]

The present invention provides the following means to achieve the aforementioned objective.

(1) An optical laminate according to a first aspect is an optical laminate in which a transparent substrate, a hard coat layer, an optically functional layer, and an antifouling layer are sequentially stacked, wherein the hard coat layer includes fillers, the hard coat layer has a thickness of greater than 1.0 µm and less than 3.0 µm, and a 10-point mean roughness Rz of a surface of the optical laminate is equal to or greater than 19 nm and equal to or less than 100 nm.
(2) In the optical laminate according to the aspect, an apparent mean particle size of an aggregate of the fillers which is obtained by measuring the surface of the optical laminate using an atomic force microscope may be equal to or greater than 150 nm and equal to or less than 2200 nm.
(3) In the optical laminate according to the aspect, an apparent mean particle size of an aggregate of the fillers which is obtained by measuring a surface of the hard coat layer using an atomic force microscope may be equal to or greater than 110 nm and equal to or less than 1600 nm.
(4) In the optical laminate according to the aspect, a minimum value of a diameter of a mandrel at the time of bending in which no crack is generated may be equal to or less than 7 mm when the optical laminate is bent by 180° such that the antifouling layer faces inward using a bending test machine based on JIS K5600-5-1.
(5) In the optical laminate according to the aspect, the optically functional layer may include at least a low-refractive-index layer.
(6) In the optical laminate according to the aspect, the optically functional layer may comprise a low-refractive-index layer and a high-refractive-index layer which are alternately stacked.
(7) In the optical laminate according to the aspect, a value of a water contact angle after 2000 cycles of a steel-wool sliding test may be equal to or greater than 80% of the value of the water contact angle before the steel-wool sliding test.
(8) In the optical laminate according to the aspect, the antifouling layer may include a fluorine-based compound.
(9) An article according to a second aspect includes the optical laminate according to the aspect.
(10) An image display device according to a third aspect includes a screen and the optical laminate according to the aspect formed on the surface of the screen.

### [Advantageous Effects of Invention]

The optical laminate, the article, and the image display device according to the aspects have excellent scratch resistance and bending resistance.

### [Brief Description of Drawings]

FIG. 1 is a sectional view illustrating an example of an optical laminate according to a first embodiment.
FIG. 2 is a diagram schematically illustrating an example of manufacturing equipment for manufacturing the optical laminate according to the first embodiment.

### [Description of Embodiments]

Hereinafter, an embodiment will be described in detail with appropriate reference to the accompanying drawings. In the drawings used in the following description, featured parts may be enlarged for the purpose of easy understanding of features, and dimensional ratios and the like of constituents may be different from actual ones. Materials, dimensions, and the like mentioned in the following description are merely examples, and the present invention is not limited thereto and can be appropriately modified as long as advantageous effects of the present invention can be achieved.

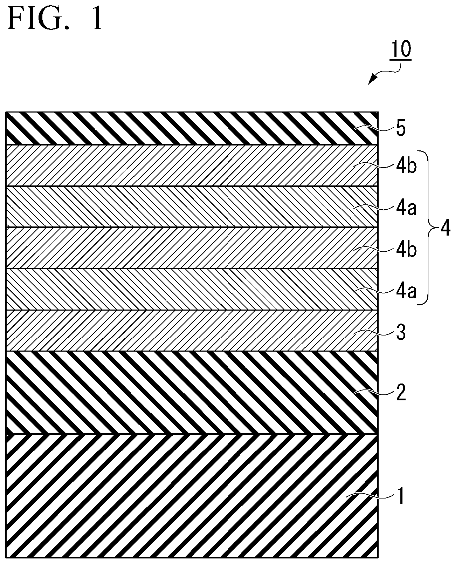

FIG. 1 is a sectional view illustrating an example of an optical laminate 10 according to a first embodiment. In the optical laminate 10, a transparent substrate 1, a hard coat layer 2, an adhesion layer 3, an optically functional layer 4, and an antifouling layer 5 are sequentially stacked.

The transparent substrate 1 is formed of a transparent material that can transmit light in a visible light region. The transparent substrate 1 is, for example, a plastic film. Examples of the material of the plastic film include, a polyester-based resin, an acetate-based resin, a polyether sulfone-based resin, a polycarbonate-based resin, a polyamide-based resin, a polyimide-based resin, a polyolefin-based resin, a (meth)acrylic resin, a polyvinylchloride-based resin, a polyvinylidene chloride-based resin, a polystyrene-based resin, a polyvinyl alcohol-based resin, a polyarylate resin, and a polyphenylene sulfide-based resin. The transparent substrate 1 may be an inorganic substrate and may be a glass film.

The material of the transparent substrate 1 preferably includes a polyester-based resin, an acetate-based resin, a polycarbonate-based resin, or a polyolefin-based resin. The transparent substrate 1 is preferably a triacetyl cellulose (TAC) substrate. When the plastic film is a TAC substrate, a permeated layer which is formed by causing some components of the hard coat layer 2 to permeate the substrate is formed at a boundary when the hard coat layer 2 is formed on one surface of the substrate. As a result, it is possible to enhance adhesiveness between the transparent substrate 1 and the hard coat layer 2 and to curb generation of interference fringes based on an interlayer difference in refractive index.

"Transparent material" mentioned in the present invention means a material of which transmittance of light in a use wavelength region is equal to or greater than 80% within a range in which the effects of the present invention are not impaired. "(meth)acrylic" mentioned in the present embodiment has a meaning including both methacrylic and acrylic.

The transparent substrate 1 may include a reinforcement material within a range in which the optical characteristics are not substantially impaired. Examples of the reinforcement material include cellulose nanofiber and nanosilica.

The transparent substrate 1 may be a film having an optical function and/or a physical function. Examples of the film having an optical and/or physical function include a polarizing film, a phase difference compensation film, a heat-ray cutoff film, a transparent conductive film, a luminance enhancing film, and a barrier performance enhancing film.

The thickness of the transparent substrate 1 differs, for example, depending on whether a display is bent inward or outward when the optical laminate 10 is applied to a foldable display device and what gap is allowed between bent surfaces or what size can be secured in a bent portion of the foldable display, for example, when the display is bent inward and is, for example, equal to or greater than 2 µm and preferably equal to or greater than 8 µm. An upper limit of the thickness is, for example, equal to or less than 250 µm and preferably equal to or less than 100 µm. When the thickness of the transparent substrate 1 is equal to or greater than 2 µm, for example, it is possible to secure rigidity of the substrate while realizing a smaller bending diameter in inward bending. On the other hand, when the thickness is greater than 250 µm, elasticity and bendability of the transparent substrate 1 are not satisfactory whether the bending direction is inward or outward, and the bending diameter is likely to increase.

The thickness of the transparent substrate 1 is not particularly limited and is, for example, equal to or greater than 25 µm, and preferably equal to or greater than 40 µm. When the thickness of the transparent substrate 1 is equal to or greater than 25 µm, it is possible to secure rigidity of the substrate and to prevent formation of wrinkles even when a stress is applied to the optical laminate 10. When the thickness of the transparent substrate 1 is equal to or greater than 25 µm and the hard coat layer 2 is continuously formed on the transparent substrate 1, there is little concern about the formation of wrinkles. When the thickness of the transparent substrate 1 is equal to or greater than 40 µm, wrinkles are still less likely to be formed.

The surface of the transparent substrate 1 may be subjected in advance to etching and/or undercoating such as sputtering, corona discharge, ultraviolet irradiation, electron beam irradiation, formation, and oxidation. When these processes are performed in advance, the adhesion of the hard coat layer 2 formed on the transparent substrate 1 is improved. By performing solvent cleaning, ultrasonic cleaning, or the like on the surface of the transparent substrate 1 according to necessity before forming the hard coat layer 2 on the transparent substrate 1, the surface of the transparent substrate 1 may be dust-removed and cleaned.

The hard coat layer 2 includes a binder resin and filters. The hard coat layer 2 may additionally include a coagulant.

The binder resin preferably has transparency, and examples thereof include an ionization radiation-curable resin which is a resin cured with ultraviolet light or electron beams, a thermoplastic resin, and a thermosetting resin.

Examples of an ionization radiation-curable resin which is the binder resin include ethyl (meth)acrylate, ethylhexyl (meth)acrylate, styrene, methylstyrene, and N-vinyl pyrrolidone. An ionization radiation-curable resin may be a compound having two or more unsaturated bonds. Examples of the ionization radiation-curable resin having two or more unsaturated bonds include multifunctional compounds such as trimethylolpropane tri(meth)acrylate, tripropyleneglycol di(meth)acrylate, diethyleneglycol di(meth)acrylate, dipropyleneglycol di(meth)acrylate, pentaerythritol tri(meth)acrylate, pentaerythritol tetra(meth)acrylate, dipentaerythritol hexa(meth)acrylate, 1,6-hexanediol di(meth)acrylate, neopentylglycol di(meth)acrylate, trimethylolpropane tri(meth)acrylate, ditrimethylolpropane tetra(meth)acrylate, dipentaerythritol penta(meth)acrylate, tripentaerythritol octa(meth)acrylate, tetrapentaerythritol deca(meth)acrylate, isocyanuric acid tri(meth)acrylate, isocyanuric acid di(meth)acrylate, polyester tri(meth)acrylate, polyester di(meth)acrylate, bisphenol di(meth)acrylate, diglycerine tetra(meth)acrylate, adamantyl di(meth)acrylate, isoboronyl di(meth)acrylate, dicyclopentane di(meth)acrylate, tricyclodecane di(meth)acrylate, and ditrimethylolpropane tetra(meth)acrylate. Among these, pentaerythritol triacrylate (PETA), dipentaerythritol hexaacrylate (DPHA), and pentaerythritol tetraacrylate (PETTA) can be suitably used as a binder resin. Here, "(meth)acrylate" is used to have both meanings of methacrylate and acrylate. Products formed by degenerating the aforementioned compounds using propylene oxide (PO), ethylene oxide (EO), caprolactone (CL), or the like may be used as the ionization radiation-curable resin. An acryl-based UV-curable resin composition can be preferably used as the ionization radiation-curable resin.

Examples of the thermoset resin which is a binder resin include styrene resins, (meth)acrylic resins, vinyl acetate resins, vinyl ether resins, halogen-containing resins, alicyclic olefin resins, polycarbonate resins, polyester resins, polyamide resins, cellulose derivatives, silicone resins, and rubber or elastomer. The thermoset resin is amorphous and is soluble in an organic solvent (particularly a common solvent that can resolve a plurality of polymers and curable compounds). Particularly, in view of transparency and weather resistance, the binder resin is preferably a styrene resin, a (meth)acrylic resin, an alicyclic olefin resin, a polyester resin, a cellulose derivative (such as cellulose esters), or the like.

Examples of the thermoset resin which is a binder resin include a phenol resin, a urea resin, a diallylphthalate resin, a melamine resin, a guanamine resin, an unsaturated polyester resin, a polyurethane resin, an epoxy resin, an aminoalkyd resin, a melamineurea co-condensed resin, a silicone resin, and a polysiloxane resin (a so-called silsesquioxane in a basket form, a ladder form, or the like).

The hard coat layer 2 may include an organic resin and an inorganic material or may be formed of an organic-inorganic hybrid material. For example, the hard coat layer may be formed using a sol-gel method. Examples of the inorganic material include silica, alumina, zirconia, and titania. An example of the organic material may be an acrylic resin.

The filler may be formed of an organic material or an inorganic material or may be formed of an organic material and an inorganic material. The filler included in the hard coat layer 2 can be variously selected according to usage of the optical laminate 10 in view of antiglare, adhesion to the optically functional layer 4 which will be described later, or anti-blocking. Specifically, known particles such as silica (an oxide of Si) particles, alumina (aluminum oxide) particles, or organic particles can be used as the filler. In order to provide toughness to the hard coat layer 2, various reinforcing materials may be added as the filler within a range in which optical characteristics are not damaged. For example, the reinforcing material is cellulose nanofiber.

When the filler is silica particles and/or alumina particles, a mean particle size of the filler is, for example, equal to or less than 800 nm, preferably equal to or less than 100 nm, and more preferably equal to or greater than 40 nm and equal to or less than 70 nm. When the filler is organic particles, the mean particle size of the organic particles is, for example, equal to or less than 10 µm, preferably equal to or less than 5 µm, and more preferably equal to or less than 3 µm. When the filler is organic particles, a lower limit of the mean particle size of the filler is not particularly limited and is preferably equal to or greater than 100 nm.

The filler is dispersed in the hard coat layer 2 while a part thereof is coagulated. An aggregate in which the filler is coagulated is a secondary particle. For example, when the resin content in the hard coat layer 2 is defined as the sea and the aggregates of the filler are defined as islands, the hard coat layer 2 has a sea-island structure of the resin content and the filler. The aggregates of the filler form unevenness on the surface of the hard coat layer 2.

When the surface of the hard coat layer 2 is measured using an atomic force microscope (AFM), the aggregates of the filler can be ascertained as unevenness. The surface shape of the hard coat layer 2 can be measured, for example, using an atomic force microscope (AFM5000) manufactured by Hitachi Hitech Science. An apparent mean particle size of aggregates of the filler obtained by measuring the surface of the hard coat layer 2 using an atomic force microscope is, for example, equal to or greater than 110 nm and equal to or less than 1600 nm, preferably equal to or greater than 230 nm and equal to or less than 1600 nm, and more preferably equal to or greater than 300 nm and equal to or less than 1600 nm. When the apparent mean particle size increases, the surface unevenness increases and it is possible to further curb sliding damage of recesses. As a result, even when the number of times of sliding is increased, it is likely to maintain antifouling characteristics and scratches are less likely to be formed.

The apparent mean particle size of aggregates of the filler can be acquired using an AFM on the basis of the Otsu's automatic threshold setting method (for example, Institute of Electronics and Communication Engineers of Japan, Journal D63(4) p. 349-356, 1980-04). The Otsu's automatic threshold setting method is a classification proposed by Otsu et al., and is a method of classifying a group into two classes by setting a threshold value for minimizing the intra-class variance and maximizing the inter-class variance. The threshold value acquired using this method is equal to a threshold value for minimizing a mean square error of binary images acquired as an original grayscale image.

The AFM displays a difference in distance between a probe of the AFM and the surface of the hard coat layer 2 as a grayscale image. By binarizing and classifying this grayscale image using the Otsu's automatic threshold setting method, recesses and protrusions in the surface of the hard coat layer 2 are classified. The mean particle size of the classified protrusions is the apparent mean particle size of aggregates of the filler. When the apparent mean particle size of aggregates of the filler is calculated, an area of 10 µm ×10 µm at five arbitrary points on a film is measured using the AFM, and the mean particle sizes calculated at the five points are additionally averaged.

The degree of aggregation of the filler can be controlled on the basis of agitation conditions at the time of mixing of the filler and the binder resin, surface treatment of the filler, addition of a coagulant, an amount of added coagulant, and the like. The coagulant is, for example, a material having poor solubility in the binder resin or a polar material having high polarity. For example, a compound having oxygen or nitrogen in a cyclic structure serves as the coagulant. Other known agents can be used as the coagulant.

A 10-point mean roughness Rz of the surface of the hard coat layer 2 is, for example, equal to or greater than 15 nm and equal to or less than 110 nm and preferably equal to or greater than 20 nm and equal to or less than 75 nm. An arithmetic mean roughness Ra of the surface of the hard coat layer 2 is, for example, equal to or greater than 1.0 nm and equal to or less than 10 nm. The 10-point mean roughness Rz and the arithmetic mean roughness Ra are values based on JIS B 0601: 1994 and JIS B 0031: 1994.

A part of the filler may be exposed from the surface on an adhesion layer 3 side of the hard coat layer 2. That is, the filler of the hard coat layer 2 may be formed to be in contact with the adhesion layer 3. In this case, the binder resin of the hard coat layer 2 and the adhesion layer 3 are strongly bonded. Accordingly, it is possible to enhance the adhesion between the hard coat layer 2 and the adhesion layer 3, to enhance hardness of the hard coat layer 2, and to improve scratch resistance of the optical laminate 10.

The thickness of the hard coat layer 2 is greater than 1.0 µm and less than 3.0 µm, preferably equal to or greater than 1.2 µm and less than 3.0 µm, and more preferably equal to or greater than 1.5 µm and equal to or less than 2.9 µm. When the thickness of the hard coat layer 2 is greater than 1.0 µm, it is possible to curb reaction inhibition due to oxygen in a hardening reaction of the binder resin. When the thickness of the hard coat layer 2 is in the aforementioned range, the unevenness of the surface of the hard coat layer 2 can be set to a predetermined range, and a hard coat layer having excellent bendability can be provided. The thickness of the hard coat layer 2 can be measured by cutting the hard coat layer 2 such that a cross-section of the film is exposed using a focused ion beam device (FIB) and then observing the cross-section using a scanning electronic microscope (SEM). In the following description, the thicknesses of the layers are measured using the same method.

The hard coat layer 2 may include a single layer or a plurality of layers stacked. For example, known functions such as an ultraviolet absorbing function, an antistatic function, a refractive index adjusting function, and a hardness adjusting function may be additionally provided to the hard coat layer 2. The functions provided to the hard coat layer 2 may be provided to a single hard coat layer or may be individually provided to a plurality of layers. In order to cope with bendability of a display device, for example, an ionization radiation-curable resin or a thermoset resin may be cured such that the hardness of only a bendable part is decreased without completely curing the resin.

The adhesion layer 3 is a layer for enhancing the adhesion between the hard coat layer 2 and the optically functional layer 4. When the hard coat layer 2 is formed of an inorganic material, the adhesion layer 3 may be omitted.

The adhesion layer 3 is formed of, for example, an oxygen-deficient metal oxide or a metal. The oxygen-deficient metal oxide is a metal oxide of which the oxygen number is deficient for a stoichiometric composition. Examples of the oxygen-deficient metal oxide include SiOₓ, AlOₓ, TiOₓ, ZrOₓ, CeOₓ, MgOₓ, ZnOₓ, TaOₓ, SbOₓ, SnOₓ, and MnOₓ. Examples of the metal include Si, Al, Ti, Zr, Ce, Mg, Zn, Ta, Sb, Sn, and Mn. In the adhesion layer 3, for example, x in SiOₓ may be greater than 0 and less than 2.0.

From the point of view that transparency is maintained and excellent optical characteristics are obtained, the thickness of the adhesion layer 3 is preferably greater than 0 nm and equal to or less than 20 nm and more preferably equal to or greater than 1 nm and equal to or less than 10 nm.

The optically functional layer 4 has a function of realizing optical functions. The optical functions are functions of controlling reflection, transmission, and refraction, which are optical characteristics, and examples thereof include an antireflection function, a selective reflection function, an antiglare function, and a lens function. The optically functional layer 4 is, for example, an antireflection layer, a selective reflection layer, and an antiglare layer. Known layers can be used as the antireflection layer, the selective reflection layer, and the antiglare layer. Each of the antireflection layer, the selective reflection layer, and the antiglare layer may include a single layer or a laminate of a plurality of layers.

The optically functional layer 4 illustrated in FIG. 1 is an antireflection layer. The optically functional layer 4 illustrated in FIG. 1 includes a high-refractive-index layer 4a and a low-refractive-index layer 4b. The optically functional layer 4 illustrated in FIG1 is a laminate with a total of four layers in which the high-refractive-index layer 4a and the low-refractive-index layer 4b are alternately stacked sequentially from the adhesion layer 3 side. The numbers of layers of the high-refractive-index layer 4a and the low-refractive-index layer 4b are not particularly limited, and the numbers of layers of the high-refractive-index layer 4a and the low-refractive-index layer 4b may be an arbitrary number.

The optical laminate 10 illustrated in FIG. 1 realizes an antireflection function by causing reflected light reflected from the boundaries of the laminate in which the high-refractive-index layer 4a and the low-refractive-index layer 4b are alternately stacked to interfere with each other and diffusing light input from the antifouling layer 5 side.

The low-refractive-index layer 4b includes, for example, an oxide of Si. The low-refractive-index layer 4b is, for example, a layer including SiO₂ (an oxide of Si) as a main component. The oxide of Si can be easily acquired and is thus advantageous in terms of cost. A single-layered film of SiO₂ is colorless and transparent. In this embodiment, the main component of the low-refractive-index layer 4b means a component of which 50 mass% or more is included in the low-refractive-index layer 4b.

When the low-refractive-index layer 4b is a layer including an oxide of Si as a main component, the low-refractive-index layer 4b may include another element of less than 50 mass%. The content of the other element other than the oxide of Si is preferably equal to or less than 10%. Examples of the other element include Na, Zr, Al, and N. Na enhances durability of the low-refractive-index layer 4b. Zr, Al, and N enhances the hardness of the low-refractive-index layer 4b and enhances alkali resistance.

The refractive index of the low-refractive-index layer 4b is, for example, equal to or greater than 1.20 and equal to or less than 1.60 and preferably equal to or greater than 1.30 and equal to or less than 1.50. A dielectric used in the low-refractive-index layer 4b is, for example, magnesium fluoride (MgF₂, refractive index: 1.38).

The refractive index of the high-refractive-index layer 4a is, for example, equal to or greater than 2.00 and equal to or less than 2.60 and preferably equal to or greater than 2.10 and equal to or less than 2.45. The refractive indices of the low-refractive-index layer 4b and the high-refractive-index layer 4a are measured using an ellipsometric analyzer.

Examples of the dielectric used in the high-refractive-index layer 4a include niobium pentoxide (Nb₂O₅, refractive index: 2.33), titanium oxide (TiO₂, refractive index: 2.33 to 2.55), tungsten oxide (WO₃, refractive index: 2.2), cerium oxide (CeO₂, refractive index: 2.2), tantalum pentoxide (Ta₂O₅, refractive index: 2.16), zinc oxide (ZnO, refractive index: 2.1), indium tin oxide (ITO, refractive index: 2.06), and zirconium oxide (ZrO₂, refractive index: 2.2). When conductive characteristics are provided to the high-refractive-index layer 4a, for example, ITO or indium-oxide-zinc oxide (IZO) can be selected as the dielectric used in the high-refractive-index layer 4a.

In the optically functional layer 4, a layer formed of niobium pentoxide (Nb₂O₅, refractive index: 2.33) is preferably used as the high-refractive-index layer 4a and a layer formed of SiO₂ is preferably used as the low-refractive-index layer 4b.

The thickness of the low-refractive-index layer 4b can be equal to or greater than 1 nm and equal to or less than 200 nm and can be appropriately selected according to a wavelength range in which an antireflection function is required. The thickness of the high-refractive-index layer 4a can be equal to or greater than 1 nm and equal to or less than 200 nm and can be appropriately selected according to a wavelength range in which an antireflection function is required. The thicknesses of the high-refractive-index layer 4a and the low-refractive-index layer 4b can be appropriately selected according to design of the optically functional layer 4. For example, the high-refractive-index layer 4a with a thickness of 5 nm to 50 nm, the low-refractive-index layer 4b with a thickness of 10 nm to 80 nm, the high-refractive-index layer 4a with a thickness of 20 nm to 200 nm, and the low-refractive-index layer 4b with a thickness of 50 nm to 200 nm can be stacked sequentially from the adhesion layer 3 side.

For example, the low-refractive-index layer 4b is provided on the antifouling layer 5 out of the layers of the optically functional layer 4. When the low-refractive-index layer 4b of the optically functional layer 4 is in contact with the antifouling layer 5, the antireflection performance of the optically functional layer 4 is enhanced.

The antifouling layer 5 is provided on the outermost surface of the optically functional layer 4. The antifouling layer 5 prevents fouling of the optically functional layer 4. The antifouling layer 5 curbs abrasion of the optically functional layer 4 due to abrasion resistance and scratch resistance when it is applied to a touch panel or the like.

The antifouling layer 5 is, for example, a deposited film formed by depositing vapor of an antifouling material. The antifouling layer 5 is formed, for example, by depositing vapor of a fluorine-based compound as an antifouling material in vacuum on one surface of the low-refractive-index layer 4b of the optically functional layer 4. When the antifouling layer 5 includes a fluorine-based compound, friction resistance and alkali resistance of the optical laminate 10 are further improved.

The fluorine-based compound included in the antifouling layer 5 is, for example, a fluorine-based organic compound. The fluorine-based organic compound is, for example, a compound including a fluorine-modified organic group and a reactive silyl group (for example, alkoxy silane). Examples of a commercial product which can be used in the antifouling layer 5 include OPTOOL DSX (manufactured by Daikin Ltd.) and KY-100 series (manufactured by Shin-Etsu Chemical Co., Ltd.).

When a compound including a fluorine-modified organic group and a reactive silyl group (for example, alkoxy silane) is used in the antifouling layer 5 and SiO₂ is used in the low-refractive-index layer 4b of the optically functional layer 4, a siloxane bond is formed between a silanol group which is a skeleton of the fluorine-modified organic group and SiO₂. The siloxane bond enhances adhesion between the optically functional layer 4 and the antifouling layer 5.

The optical thickness of the antifouling layer 5 is, for example, equal to or greater than 1 nm and equal to or less than 20 nm and preferably equal to or greater than 3 nm and equal to or less than 10 nm. When the thickness of the antifouling layer 5 is equal to or greater than 1 nm, abrasion resistance can be sufficiently secured when the optical laminate 10 is applied to a touch panel or the like. When the thickness of the antifouling layer 5 is equal to or less than 20 nm, it is possible to decrease a time required for vapor deposition and to efficiently manufacture a product.

The antifouling layer 5 may include additives such as a photostabilizer, an ultraviolet absorber, a colorant, an antistatic agent, a lubricant, a leveling agent, an antifoamer, an antioxidant, a flame retarder, an infrared absorber, and a surfactant.

The antifouling layer 5 formed by vapor deposition is strongly bonded to the optically functional layer 4, has fewer voids, and is dense. Accordingly, the antifouling layer 5 formed by vapor deposition exhibits characteristics different from those of an antifouling layer formed using other methods such as application of an antifouling material.

The antifouling layer 5 formed by vapor deposition has fewer voids and is denser than the antifouling layer formed by application. The antifouling layer 5 formed by vapor deposition is more strongly bonded to the low-refractive-index layer 4b than the antifouling layer 5 formed by application.

Unevenness is formed on the outermost surface of the optical laminate 10 (the surface of the antifouling layer 5). The unevenness of the outermost surface of the optical laminate 10 is based on unevenness formed on the surface of the hard coat layer 2. The adhesion layer 3, the optically functional layer 4, and the antifouling layer 5 are stacked on the hard coat layer 2, and the thicknesses of the layers are not large enough to bury the unevenness of the surface of the hard coat layer 2. Accordingly, the unevenness reflecting the unevenness of the surface of the hard coat layer 2 is formed on the outermost surface of the optical laminate 10.

The 10-point mean roughness Rz of the outermost surface of the optical laminate 10 is equal to or greater than 19 nm and equal to or less than 100 nm. When the 10-point mean roughness Rz of the outermost surface of the optical laminate 10 is in a predetermined range, the antifouling layer 5 is less likely to be peeled off with contact such as rubbing. When the antifouling layer 5 is not peeled off, scratch resistance of the optical laminate 10 is enhanced.

The arithmetic mean roughness Ra of the optical laminate 10 is, for example, equal to or greater than 1.0 nm and equal to or less than 10 nm and preferably equal to or greater than 1.2 nm and equal to or less than 9 nm.

When the surface of the optical laminate 10 is measured using an atomic force microscope (AFM), unevenness based on the aggregates of the filler of the hard coat layer 2 can be observed. The apparent mean particle size of aggregates of the filler acquired by measuring the surface of the optical laminate 10 using the atomic force microscope is, for example, equal to or greater than 150 nm and equal to or less than 2200 nm and preferably equal to or greater than 340 nm and equal to or less than 2200 nm. The apparent mean particle size of aggregates of the filler on the surface of the optical laminate 10 is measured using the same method as measuring that on the surface of the hard coat layer 2.

A value of a water contact angle after 2000 cycles of a steel-wool sliding test have been performed on the surface of the optical laminate 10 is equal to or greater than 80% of the value of the water contact angle before the steel-wool sliding test has been performed, preferably equal to or greater than 84%, and more preferably equal to or greater than 88%. That is, in the optical laminate 10 including the antifouling layer 5 formed by vapor deposition or the like, for example, a maintenance ratio of the water contact angle before and after a scratch test through horizontal reciprocating of a steel-wool sliding test 2000 times is equal to or greater than 80%.

It is preferable that cracks or peeling not be generated in the antifouling layer 5, the optically functional layer 4, the adhesion layer 3, and the hard coat layer 2 when the optical laminate 10 is bent at a diameter of 7 mm or less in a bending test. Specifically, when the optical laminate 10 is bent by 180° such that the antifouling layer 5 faces inward using a bending test machine based on JIS K5600-5-1: 1999 (Type 1 mandrel test machine), a minimum value of a mandrel diameter at the time of bending with which no crack is generated is preferably a value equal to or less than 7 mm. This bending test is different from a cylindrical mandrel test based on JIS K5600-5-1: 1999 in that the optical laminate 10 is bent such that the antifouling layer 5 which is a coated surface faces inward. The minimum value of the mandrel diameter at the time of bending with which no crack is generated is a value larger by 1 mm than the mandrel diameter with which generation of a crack has been first observed. When the optical laminate 10 is applied to an information terminal or the like including a foldable screen with a high bending frequency at the time of use, it is preferable that these characteristics be satisfied.

### [Method of manufacturing optical laminate]

An example in which the optical laminate 10 is manufactured using the transparent substrate 1 wound in a roll shape will be described below.

First, the transparent substrate 1 wound in a roll shape is wound off. Then, slurry including a material which will be the hard coat layer 2 is applied onto the transparent substrate 1 using a known method and is cured using a known method corresponding to the material which will be the hard coat layer 2. Here, for example, a coagulant is added to the slurry including the material which will be the hard coat layer 2. A material (for example, a compound having oxygen or nitrogen in a cyclic structure) having poor solubility in the resin content of the hard coat layer 2 may be mixed into the slurry including the material which will be the hard coat layer 2. Predetermined unevenness is formed on the surface of the cured hard coat layer 2. Then, the transparent substrate 1 having the hard coat layer 2 formed on the surface is wound in a roll shape using a known method.

Subsequently, an adhesion layer forming step of forming an adhesion layer 3 on the hard coat layer 2 and an optically functional layer forming step of forming the optically functional layer 4 thereon are performed. Thereafter, an antifouling layer forming step of forming the antifouling layer 5 on the optically functional layer 4 is performed. A first surface processing step of processing the surface of the hard coat layer 2 may be performed before the optically functional layer forming step is performed. A second surface processing step of processing the surface of an antireflection film may be performed after the optically functional layer forming step is performed.

It is preferable that the first surface processing step, the adhesion layer forming step, the optically functional layer forming step, the second surface processing step, and the antifouling layer forming step be continuously performed in a state in which the optical laminate during manufacturing is maintained in a depressurized state.

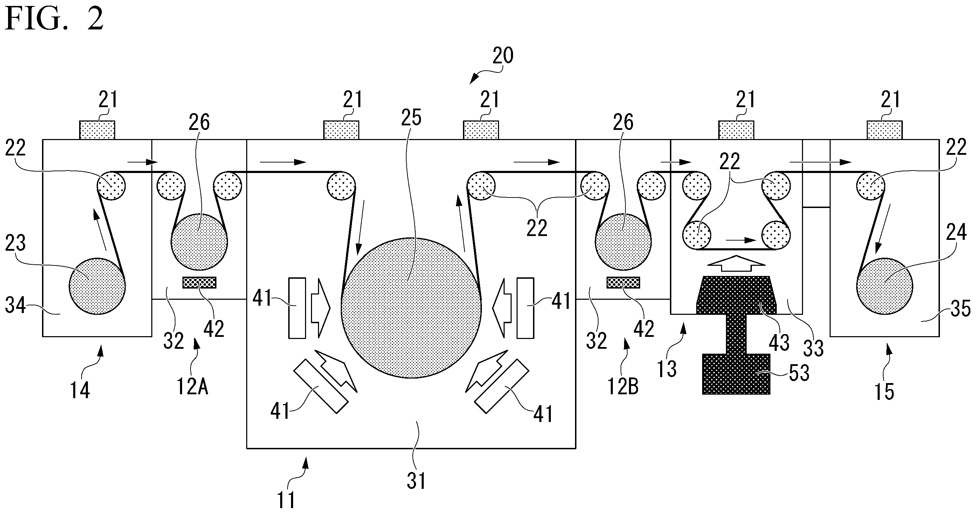

FIG. 2 is a diagram illustrating an example of manufacturing equipment that can be used to manufacturing the optical laminate 10 according to the first embodiment. The manufacturing equipment 20 includes a roll winding-off device 14, a pre-processing device 12A, a sputtering device 11, a pre-processing device 12B, a vapor deposition device 13, and a roll winding device 15, which are connected in this order. The manufacturing equipment 20 manufactures an optical laminate 10 in a roll-to-roll manner by winding off a substrate from a roll, causing the substrate to sequentially pass through the connected devices, and then winding the resultant substrate.

A conveyance speed (a line speed) of the optical laminate 10 during manufacturing can be appropriately set. For example, the conveyance speed is preferably set to range from 0.5 m/min to 20 m/min and more preferably to range from 0.5 m/min to 10 m/min.

The roll winding-off device 14 includes a chamber 34, a vacuum pump 21, a winding-off roll 23, and a guide roll 22. The chamber 34 is depressurized by the vacuum pump 21. The vacuum pump 21 is a known pump. The transparent substrate 1 having the hard coat layer 2 formed is wound on the winding-off roll 23. The winding-off roll 23 supplies the transparent substrate 1 having the hard coat layer 2 formed to the pre-processing device 12A at a predetermined conveyance speed.

The pre-processing device 12A includes a chamber 32, a can roll 26, a guide roll 22, and a plasma discharge device 42. The can roll 26, the guide roll 22, and the plasma discharge device 42 are installed in the chamber 32. The chamber 32 is connected to the chambers 31 and 34. The chamber 32 is depressurized.

The can roll 26 and the guide roll 22 convey a film sent from the roll winding-off device 14 at a predetermined conveyance speed.

The plasma discharge device 42 is provided to face an outer circumferential surface of the can roll 26 with a predetermined gap therebetween. The plasma discharge device 42 ionizes gas using glow discharge. Examples of the gas include an argon gas, an oxygen gas, a nitrogen gas, and a helium gas. The argon gas is cheap and inert and does not affect optical characteristics, which is preferable. The plasma discharge device 42 is, for example, a glow discharge device that ionizes the argon gas using high-frequency plasma.

The plasma discharge device 42 performs a first surface processing step as pre-processing of a surface formed on the adhesion layer 3 and the optically functional layer 4. In the first surface processing step, the can roll 26 and the guide roll 22 are rotated and the surface of the hard coat layer 2 is processed at a predetermined conveyance speed. The plasma discharge device 42 performs, for example, glow discharge processing, plasma processing, ion etching, and alkali processing. The glow discharge processing can be performed for a large area. When the glow discharge processing is performed, the surface of the hard coat layer 2 is roughened at a nano-level, and materials having weak bonding forces on the surface of the hard coat layer 2 are removed. As a result, adhesion between the hard coat layer 2 and the adhesion layer 3 formed on the hard coat layer 2 is enhanced.

The film passing through the plasma discharge device 42 is conveyed to the sputtering device 11.

The sputtering device 11 includes a chamber 31, the vacuum pump 21, a film-forming roll 25, the guide roll 2, and a film-forming unit 41. The film-forming roll 25, the guide roll 22, and the film-forming unit 41 are installed in the chamber 31. The chamber 31 is depressurized using the vacuum pump 21. In the chamber 31 of the sputtering device 11, the adhesion layer forming step and the optically functional layer forming step are performed.

The film-forming roll 25 and the guide roll 22 convey a film at a predetermined conveyance speed. The sputtering device 11 sequentially stacks the adhesion layer 3, the high-refractive-index layer 4a, and the low-refractive-index layer 4b on the hard coat layer 2 of the transparent substrate 1 conveyed on the film-forming roll 25 through sputtering. By alternately stacking the high-refractive-index layer 4a and the low-refractive-index layer 4b, the optically functional layer 4 is formed.

The film-forming unit 41 is disposed to face the outer circumferential surface of the film-forming roll 25 with a predetermined gap therefrom, and a plurality of film-forming units are provided to surround the film-forming roll 25. The number of film-forming units 41 is determined according to a total number of the adhesion layer 3 and the high-refractive-index layer 4a and the low-refractive-index layer 4b constituting the optically functional layer 4. A plurality of the film-forming rolls 25 or chambers 31 may be provided, and a space in which the film-forming units 41 is provided may be secured.

Each film-forming unit 41 is, for example, a sputtering device. Each film-forming unit 41 includes, for example, a target, a voltage application unit for the target, a gas supply unit for supplying a reactant gas or the like, and a magnetic field source for forming a magnetic field on the surface of the target. The target varies according to a film to be formed. For example, when a layer of SiO₂ is formed, Si is used as the target and O₂ is used as the reactant gas. For example, when a layer of Nb₂O₅ is formed, Nb is used as the target and O₂ is used as the reactant gas. A film formation method of the film-forming unit 41 is, for example, a sputtering method and preferably a magnetron sputtering method. In addition, a two-pole sputtering method using plasma generated using DC glow discharge or high frequency, or a three-pole sputtering method of adding a thermionic cathode may be used.

The sputtering device 11 may include an optical monitor that measures optical characteristics after the layers have been formed. The optical monitor checks qualities of the layers. The optical monitor measures optical characteristics in a width direction of each layer, for example, using an optical head which can scan in the width direction. The optical monitor can measure an optical thickness distribution in the width direction of each layer, for example, by measuring a wavelength with peak reflectance as optical characteristics and converting the wavelength to an optical thickness. By measuring the optical characteristics using the optical monitor, it is possible to form the adhesion layer 3 and the optically functional layer 4 having optimal optical characteristics while adjusting sputtering conditions in real time.

The film having the adhesion layer 3 and the optically functional layer 4 formed is conveyed to the pre-processing device 12B.

The pre-processing device 12B includes the chamber 32, the can roll 26, the guide roll 22, and the plasma discharge device 42. The configuration of the pre-processing device 12B is the same as the pre-processing device 12A. In the chamber 32 of the pre-processing device 2B, a second surface processing step as pre-processing for the surface of the antifouling layer 5 is performed. On the surface of the film subjected to the second surface processing step, surface roughness may change. The surface roughness of the surface on which the antifouling layer 5 is stacked may be adjusted by changing conditions of the second surface processing step. The film subjected to the pre-processing is conveyed to the vapor deposition device 13.

The vapor deposition device 13 includes a chamber 33, the vacuum pump 21, the guide roll 22, a vapor deposition source 43, and a heater 53. The chamber 33 is depressurized using the vacuum pump 21. The vapor deposition device 13 forms the antifouling layer 5 on the conveyed film through vapor deposition.

The vapor deposition source 43 is disposed at a position facing a film which is conveyed substantially horizontally between two neighboring guide rolls 22. The vapor deposition source 43 supplies vaporized gas including a material which will be the antifouling layer 5 to the optically functional layer 4. The direction of the vapor deposition source 43 can be arbitrarily set.

The heater 53 heats the material which will be the antifouling layer 5 at vapor-pressure temperature. The heater 53 performs heating, for example, using a resistor heating method, a heater heating method, an induction heating method, an electron beam method.

The vapor deposition device 13 includes, for example, a guide plate, a film thickness meter, a vacuum pressure meter, and a power supply device. The guide plate guides a vaporized deposition material to a desired position. The film thickness meter measures a thickness of a deposited film. The vacuum pressure meter measures a degree of vacuum in the chamber 33. The vacuum pressure meter is, for example, an ion gauge. The power supply device is, for example, a high-frequency power source.

The film on which the antifouling layer 5 has been formed by the vapor deposition device 13 is conveyed to the roll winding device 15. It is preferable that the steps from the optically functional layer forming step to the antifouling layer forming step be continuously performed in-line while a depressurized state is maintained. Accordingly, it is possible to avoid generation of a natural oxide film and contamination due to foreign materials or the like.

The roll winding device 15 includes a chamber 35, the vacuum pump 21, a winding roll 24, and the guide roll 22. The chamber 35 is depressurized using the vacuum pump 21. The winding roll 24 winds the optical laminate 10 having the antifouling layer 5 formed. The winding roll 24 and the guide roll 22 wind the optical laminate 10 at a predetermined winding speed. A carrier film may be used according to necessity. Through the aforementioned processes, it is possible to manufacture the optical laminate 10.

Since the surface of the optical laminate 10 according to the first embodiment has a predetermined shape, the antifouling layer 5 is less likely to be peeled even when contact such as rubbing occurs. It is less likely to decrease scratch resistance of the optical laminate 10 due to peeling of the antifouling layer 5 from the optical laminate 10. That is, the optical laminate 10 can maintain scratch resistance for a long term.

The present invention is limited to the aforementioned embodiment and can be modified in various forms without departing from the gist of the invention described in the appended claims.

For example, the optical laminate 10 may include a layer in addition to the transparent substrate 1, the hard coat layer 2, the adhesion layer 3, the optically functional layer 4, and the antifouling layer 5. The optical laminate 10 may include various layers on a surface opposite to the surface of the transparent substrate 1 on which the optically functional layer 4 and the like are formed according to necessity. For example, an adhesive layer that is used for adhesion to another member may be further provided. Another optical film may be provided with the adhesive layer interposed therebetween. Examples of the other optical film include a polarizing film, a phase difference compensation film, and films serving as a 1/2 wavelength plate and a 1/4 wavelength plate.

Layers having functions such as antireflection, selective reflection, antiglare, polarization, phase difference compensation, viewing angle compensation or enlargement, light guide, diffusion, luminance improvement, color adjustment, and conduction may be directly formed on the opposite surfaces of the transparent substrate 1. Moth-eyes or a nano-order unevenness structure for realizing an antiglare function may be formed on the surface of the optical laminate 10. Micro-order to milli-order geometric shapes such as a lens or a prism may be formed on the surface of the optical laminate 10.

The optical laminate 10 can be applied to various articles. For example, the optical laminate 10 may be provided on a screen of an image display unit such as a liquid crystal display panel, an organic EL display panel. Accordingly, for example, a touch panel display unit of a smartphone or an operation device can realize high scratch resistance, and an image display device suitable for actual use can be obtained.

The article is not limited to an image display device, and the optical laminate 10 can be applied to a glass window, goggles, a light-receiving surface of a solar cell, a screen of a smartphone, a display of a personal computer, an information input terminal, a tablet terminal, an augmented reality (AR) device, a virtual reality (VR) device, an electric display board, a glass table surface, a game machine, an operation support device for an aircraft, a subway, or the like, a navigation system, an instrument panel, and a surface of an optical sensor.

### [Examples]

### "Example 1"

First, a photo-curable resin composition in which the content of silica particles (filters) with a mean particle size of 50 nm was 28 mass% with respect to the total solid content of a resin composition (a binder resin) was prepared. The resin composition was prepared by resolving silica particles, acrylate, a leveling agent, and a photopolymerization initiator in a solvent and finally adding a coagulant thereto as described in Table 1.

**[Table 1]**

| | Product No. | Maker | Structure | Mixing proportion |
|---|---|---|---|---|
| Acrylate | CN968 | Satoma | Urethane acrylate oligomer | 8% |
| | SR444 | Satoma | Pentaerythritol triacrylate | 7% |
| | SR610 | Satoma | Polyethylene glycol (600) diacrylate | 11% |
| Silica particle | IPA-ST-L | Nissan Chemical | Silica sol with particle size of 40 nm to 50 nm (solid content 30%, IPA solvent) | 37% |
| Initiator | Irgacure 184 | BASF | Initiator | 2% |
| Solvent | PGMA | | Propyleneglycol monomethylether acetate | 30% |
| | Butyl acetate | | | 5% |
| Total | | | | 100% |
| Leveling agent | BYK377 | BYK | Polyether-denatured polydimentyl siloxane | 0.01 pts. wt. per total 100 pts. wt. |

A rolled TAC film with a thickness of 80 µm and a length of 3900 m was prepared as a transparent substrate 1, and the TAC film was coated with the aforementioned photo-curable resin composition using a gravure coater. Then, the resin composition was cured through irradiation with light, and a hard coat layer 2 with a thickness of 2.9 µm was formed.

The surface roughness (the arithmetic mean roughness Ra and the 10-point mean roughness Rz) of the formed hard coat layer 2 and the apparent mean particle size of aggregates of the filler were measured. The surface roughness and the apparent mean particle size of aggregates of the filler were measured using an AFM.

Then, an adhesion layer 3, an optically functional layer 4, and an antifouling layer 5 were continuously formed on the transparent substrate 1 having the hard coat layer 2 formed in this order in a roll-to-roll manner using the following method, and an optical laminate (an antireflection film) according to Example 1 was manufactured.

The manufacturing equipment 20 illustrated in FIG. 2 was used as manufacturing equipment. The line speed was set to 2 m/min. The first surface processing step, the adhesion layer forming step, the optically functional layer forming step, the second surface processing step, and the antifouling layer forming step were continuously performed in a state in which the optical laminate during manufacturing is placed in a depressurized state.

Glow discharge processing was performed on the hard coat layer 2 with a processing strength of the glow discharge processing set to 4000 W·min/m². Then, in a chamber with a pressure of 1.0 Pa or lower, an adhesion layer 3 formed of SiOₓ with a thickness of 5 nm was formed on the hard coat layer 2 subjected to the glow discharge processing using sputtering, and an optically functional layer 4 (a laminate) including an Nb₂O₅ film (a high-refractive-index layer) with a thickness of 15 nm, an SiO₂ film (a low-refractive-index layer) with a thickness of 38 nm, an Nb₂O₅ film (a high-refractive-index layer) with a thickness of 30 nm, an SiO₂ film (a low-refractive-index layer) with a thickness of 102 nm was formed on the adhesion layer.

Then, glow discharge processing was performed on the surface of the optically functional layer 4. An integrated output of the glow discharge processing was 326 W·min/m².

Then, under a vapor deposition chamber pressure of 0.01 Pa or lower, a vapor deposition temperature of 230°C, and a line speed of 2.0 m/min, an antifouling layer 5 formed of an alkoxy silane compound (KY-1901, manufactured by Shin-Etsu Chemical Co., Ltd.) having a perfluoropolyether group, which is an organic compound containing fluorine, was formed on the optically functional layer 4 through vapor deposition. Thereafter, the resultant film was wound in a roll shape and the optical laminate (the antireflection film) according to Example 1 was obtained.

Then, the surface roughness (the arithmetic mean roughness Ra and the 10-point mean roughness Rz) of the manufactured optical laminate and the apparent mean particle size of aggregates of the filler were measured. The surface roughness and the apparent mean particle size of aggregates of the filler were measured using an AFM.

Haze and a transmission factor were measured as optical characteristics of the optical laminate. The optical characteristics were measured using an optical spectrometer (NDH5000SP, manufactured by Nippon Denshoku Kogyo Co., Ltd.).

Optical characteristics of the optical laminate were measured. Diffused reflected light (SCE), haze, and a transmission factor (TT) were measured as the optical characteristics. The optical characteristics were measured using NDH5000SP manufactured by Nippon Denshoku Kogyo Co., Ltd. An adhesion test of the optically functional layer of the optical laminate was performed. The adhesion was estimated using a cross-cut adhesion test method based on JIS K5400.

Scratch resistance of the optical laminate was tested. A steel-wool sliding test and a pen sliding test were performed as the scratch resistance test.

The steel-wool sliding test was performed using a friction tester I-type based on JIS L0849. A frictional member was made to reciprocate along the surface of the optical laminate using a steel wool (#0000 manufactured by Bonstar Co., Ltd.) as the frictional member. In the test, a weight, a stroke, and a speed were set to 1000 g/cm², 75 mm, and 7 mm/s, respectively. The horizontal reciprocation was performed 2000 times. A contact angle of a sample after the steel-wool sliding test had been performed was measured, and a ratio to the contact angle before the steel-wool sliding test was performed (an initial contact angle) was calculated.

The contact angle was measured on the basis of an elliptical fitting method using a fully automatic contact angle meter DM-700 (manufactured by Kyowa Interface Science Co., Ltd.) under the following conditions. Distilled water was inserted into a glass syringe, a stainless steel needle was attached to a tip thereof, and the distilled water was dropped on the optical laminate (a test piece).
Amount of dropped distilled water: 2.0 µL
Measurement temperature: 25°C
The contact angle when four seconds had elapsed after distilled water was dropped was measured at six arbitrary positions on the surface of the test piece, and a mean value thereof was set as a distilled water contact angle (VCA).

The sample subjected to the steel-wool sliding test was visually inspected, and it was checked where there was a scratch which could be visually ascertained. In the visual evaluation, a sample in which a scratch was not ascertained was evaluated as "A," and a sample in which a scratch was ascertained was evaluated as "B."

The pen sliding test was performed under a weight of 250 g at a sliding speed of 60 rpm. A sliding distance was set to 5 cm, and linear sliding was performed 60000 times at the same position. In the pen sliding test, a sample in which a scratch was not ascertained through visual inspection of the sliding portion was evaluated as "A," and a sample in which a scratch was ascertained through visual inspection of the sliding portion was evaluated as "B.".

A bending test for an optical laminate was performed as follows. An optical laminate was prepared as a sample by cutting the optical laminate to 1 cm × 15cm. It was ascertained that the optical laminate had no crack in the cut surface.

First, the optical laminate was set in a bending tester (Type 1 mandrel tester) based on JIS K5600-5-1: 1999 in which a mandrel (a cylinder) of 10 mm was set such that the surface having an antifouling layer formed was bent inward. Thereafter, the optical laminate was bent by 180° by bending the tester for two seconds, and this state was maintained for ten seconds. Thereafter, it was ascertained whether there was a crack in the antifouling layer visually and using an optical microscope.

Until an abnormality such as a crack was ascertained on the surface of the optical laminate on the antifouling layer side visually and using an optical microscope, the aforementioned processing was repeated while exchanging the mandrel with a diameter decreasing by 1 mm every time, and the diameter of the mandrel larger by 1 mm than the mandrel with which a crack was first found was used as a test result of the bending test. Regarding bending resistance, a sample in which a minimum value of the mandrel diameter at the time of bending with which generation of no crack was ascertained was equal to or less than 7 mm was evaluated as "A," and a sample in which the minimum value was equal to or greater than 8 mm was evaluated as "B."

### "Examples 2 to 4"

Examples 2 to 4 are different from Example 1 in that the thickness of the hard coat layer 2 and an amount of coagulant added to the resin composition for forming the hard coat layer 2 were changed. In Example 2, the thickness of the hard coat layer 2 was set to 1.5 µm. In Example 3, the thickness of the hard coat layer 2 was set to 2.9 µm similarly to Example 1, and the amount of added coagulant was set to be greater than that in Example 1. In Example 4, the thickness of the hard coat layer 2 was set to 2.9 µm similarly to Example 1, and no coagulant was added.

In Examples 2 to 4, the same evaluation as in Example 1 was performed, the surface state of the hard coat layer 2, the surface state of the optical laminate, the optical characteristics of the optical laminate, and the scratch resistance of the optical laminate were measured, and the bending test of the optical laminate was performed.

### "Comparative Examples 1 to 4"

Comparative Examples 1 to 4 are different from Example 1 in that the thickness of the hard coat layer 2 and an amount of coagulant added to the resin composition for forming the hard coat layer 2 were changed. In Comparative Example 1, the thickness of the hard coat layer 2 in Example 1 was set to 1 µm. In Comparative Example 2, the thickness of the hard coat layer 2 was set to 3 µm. In Comparative Example 2, the thickness of the hard coat layer 2 was set to 10 µm. In Comparative Example 3, the thickness of the hard coat layer 2 was set to 5 µm. In Comparative Example 4, the thickness of the hard coat layer 2 was set to 10 µm, and the amount of added coagulant was set to be greater than that in Example 1.

In Comparative Examples 1 to 4, the same evaluation as in Example 1 was performed, the surface state of the hard coat layer 2, the surface state of the optical laminate, the optical characteristics of the optical laminate, and the scratch resistance of the optical laminate were measured, and the bending test of the optical laminate was performed. For the optical laminates according to Comparative Examples 1 to 4, the cycle test using the steel-wool sliding test was ended at a time point at which a scratch on the surface was ascertained visually after the steel-wool sliding test was performed

The test results of Examples 1 to 4 and Comparative Examples 1 to 4 are shown in the following table.

As shown in Table 2, the 10-point mean roughness Rz of the surfaces of the optical laminates in Examples 1 to 4 was equal to or greater than 21 nm and equal to or less than 98 nm. In Table 2, HC denotes a hard coat layer, and WCA denotes a contact angle.

**[Table 2]**

| | | | Ex. 1 | Ex. 2 | Ex. 3 | Ex. 4 | Com. Ex. 1 | Com. Ex. 2 | Com. Ex. 3 | Com. Ex. 4 |
|---|---|---|---|---|---|---|---|---|---|---|
| HC thickness [µm] | | | 2.9 | 1.5 | 2.9 | 2.9 | 1.0 | 10 | 5 | 10 |
| | HC | Arithmetic mean roughness (Ra) [nm] | 2.9 | 2.1 | 7.2 | 1.3 | 2.8 | 0.3 | 1.7 | 22 |
| | | 10-point mean roughness (Rz) [nm] | 33 | 26 | 72 | 23 | 24 | 4.5 | 21.2 | 120.8 |
| | | Mean particle size [nm] | 513 | 465 | 1589 | 153 | 488 | 312 | 111 | 4774 |
| | Optical laminate | Arithmetic mean roughness (Ra) [nm] | 2.8 | 2.7 | 6.6 | 1.5 | 3.2 | 0.3 | 1.9 | 18.7 |
| | | 10-point mean roughness (Rz) [nm] | 43 | 24 | 98 | 21 | 62 | 5 | 20 | 135 |
| | | Mean particle size [nm] | 359 | 406 | 1513 | 218 | 132 | 218 | 158 | 2618 |
| Optical characte ristics | Optical laminate | Transmission factor [%] | 93.0 | 88.6 | 92.9 | 93.1 | 87.4 | 93.5 | 93.1 | 89.2 |
| | | Haze [%] | 0.4 | 0.6 | 2.2 | 0.5 | 0.3 | 0.2 | 0.3 | 8.0 |
| | | WCA [°] | 116 | 117 | 118 | 116 | 117 | 118 | 117 | 118 |
| Steel-wool sliding test | 1,000 g/cm² reciprocation of 2000 times | WCA [°] | 92 | 96 | 105 | 93 | 59 | 98 | 101 | 72 |
| | | Scratch | A | A | A | A | B | A | A | B |
| | | Ratio of contact angle after Steel-wool sliding test to initial contact angle [%] | 80 | 82 | 89 | 80 | 50 | 83 | 86 | 61 |
| Pen sliding | 250g | | A | A | A | A | B | B | A | B |
| | 60000 times | | | | | | | | | |
| test | | | | | | | | | | |
| Bending test | Mandrel diameter with which cracks are first formed [nm] | 6 | 3 | 5 | 5 | 3 | 9 | 8 | 9 | |
| | Bending resistance | A | A | A | A | A | B | B | B | |

### [Reference Signs List]

1 Transparent substrate
2 Hard coat layer
3 Adhesion layer
4 Optically functional layer
4a High-refractive-index layer
4b Low-refractive-index layer
5 Antifouling layer
10 Optical laminate

## Claims

1. An optical laminate in which a transparent substrate, a hard coat layer, an optically functional layer, and an antifouling layer are sequentially stacked,
wherein the hard coat layer includes fillers,
wherein the hard coat layer has a thickness of greater than 1.0 µm and less than 3.0 µm, and
wherein a 10-point mean roughness Rz of a surface of the optical laminate is equal to or greater than 19 nm and equal to or less than 100 nm.

2. The optical laminate according to claim 1, wherein an apparent mean particle size of an aggregate of the fillers which is obtained by measuring the surface of the optical laminate using an atomic force microscope is equal to or greater than 150 nm and equal to or less than 2200 nm.

3. The optical laminate according to claim 1 or 2, wherein an apparent mean particle size of an aggregate of the fillers which is obtained by measuring a surface of the hard coat layer using an atomic force microscope is equal to or greater than 110 nm and equal to or less than 1600 nm.

4. The optical laminate according to any one of claims 1 to 3, wherein a minimum value of a diameter of a mandrel at the time of bending in which no crack is generated is equal to or less than 7 mm when the optical laminate is bent by 180° such that the antifouling layer faces inward using a bending test machine based on JIS K5600-5-1.

5. The optical laminate according to any one of claims 1 to 4, wherein the optically functional layer includes at least a low-refractive-index layer.

6. The optical laminate according to any one of claims 1 to 5, wherein the optically functional layer comprises a low-refractive-index layer and a high-refractive-index layer which are alternately stacked.

7. The optical laminate according to any one of claims 1 to 6, wherein a value of a water contact angle after 2000 cycles of a steel-wool sliding test is equal to or greater than 80% of the value of the water contact angle before the steel-wool sliding test.

8. The optical laminate according to any one of claims 1 to 7, wherein the antifouling layer includes a fluorine-based compound.

9. An article comprising the optical laminate according to any one of claims 1 to 8.

10. An image display device, comprising:
a screen; and
the optical laminate according to any one of claims 1 to 3 that is formed on a surface of the screen.
